# EUROPEAN PATENT APPLICATION

(11) **EP 2 012 262 A1**
(43) Date of publication of application: **07.01.2009**
(21) Application number: 08010977.0
(22) Date of filing: 17.06.2008
(51) Int. Cl.: G06Q 10/00

(54) **Activity manager**

(30) Priority: 19.06.2007 US 764985
(71) Applicant: Accenture Global Services GmbH, 8200 Schaffhausen (CH)
(72) Inventor: Benchikha, Hacene, Texas 77450 (US); Smith, Gerald, W., Texas 77006 (US); Luna, Joseph, M., Texas 77373 (US)
(74) Representative: Müller-Boré & Partner Patentanwälte

(57) **Abstract**

An operations instance is created in an operations environment, and an activity item is created related to the operations instance. An initialization level for the activity item is identified and one or more parameters associated with the activity item are initialized based on the initialization level, wherein one of the parameters comprises an escalation parameter. An escalation report is generated based on the escalation parameter.

## Description

### BACKGROUND

This disclosure relates to managing activities.

In an operations environment, many ongoing activities associated with an operations instance, e.g., an outsourcing operation, a software development operation, etc., can be implemented and executed. For example, a manufacturing operation can include one or more projects, issues, or tasks associated with the operation that has to be implemented and completed. These activities can be tracked in systems that allow a user to create a corresponding activity item and assign an individual to work on the activity item. Often times, however, the activity items are assigned to individuals but are not completed on time, and managers do not have the capability to readily monitor the activity to ensure its completion.

### SUMMARY

Disclosed herein are systems,, methods, and computer program products, particularly tangibly embodied as a computer-readable storage medium and/or embodied as a signal and/or data stream, of managing activity items. In one implementation, an operations instance is created in an operations environment, and an activity item is created related to the operations instance. An initialization level for the activity item is identified and one or more parameters associated with the activity item are initialized based on the initialization level, wherein one of the parameters comprises an escalation parameter. An escalation report is generated based on the escalation parameter.

In another implementation, an identification of an activity relating to an operations instance is received. A selection of one or more parameters relating to the activity is also received, wherein one of the parameters is an escalation parameter. An activity item based on the selection of one or more parameters is created and an escalation report is generated based on the escalation parameter.

In another implementation, an operations management engine generates an operations management environment and an operations instance in the operations environment. The engine also generates an activity item related to the operations instance, identifies an initialization level for the activity item, and initializes one or more parameters associated with the activity item based on the initialization level, wherein one of the parameters is an escalation parameter. A reporting engine generates an escalation report based on the escalation parameter.

### BRIEF DESCRIPTION OF THE DRAWINGS

Fig. 1 is a block diagram of an implementation of an operations system environment.
Fig. 2 is a block diagram of an example operations management activity system.
Fig. 3 is an example screenshot of an environment for creating an activity item.
Fig. 4 is an example screenshot of an environment for changing an activity item.
Fig. 5 is an example screenshot illustrating a log including changes made to an activity item.
Fig. 6 is an example screenshot of an environment for selecting a report based on filters.
Fig. 7 is an example screenshot for an escalation report.
Fig. 8 is an example process for generating an activity item.
Fig. 9 is another example process for generating an activity item.

### DETAILED DESCRIPTION

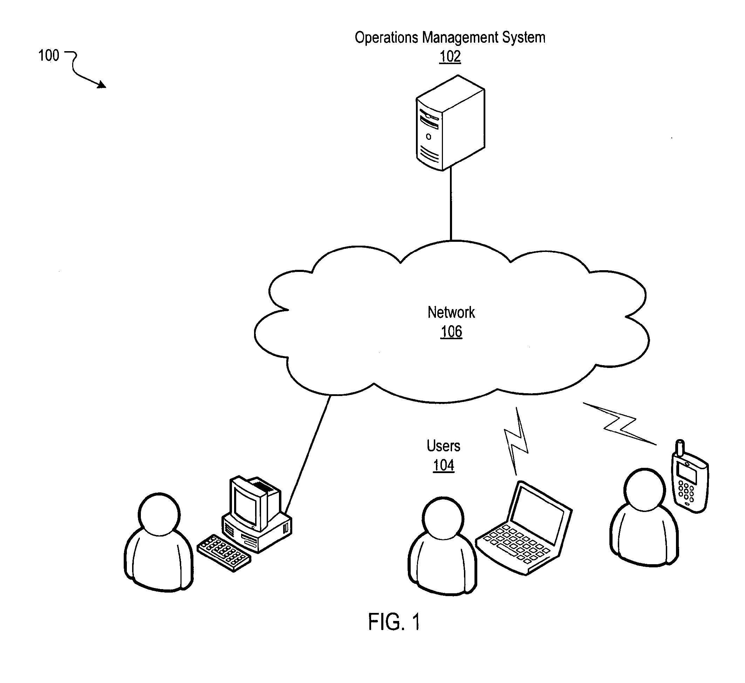

FIG. 1 is a block diagram of an implementation of an operations system environment 100. The operations system environment 100 can include an operations management system 102 and one or more user devices 104. A computer network 106, such as a local area network (LAN), wide area network (WAN), the Internet, or a combination thereof, connects the operations management system 102 and user devices 104.

In some implementations, users of the user devices 104 can directly, or indirectly, enter, maintain, and track activity information in an operations management system 102. A user of a user device 104 can include an individual at any level within the operations system 100. For example, a user of a user device 104 can include a developer, a consultant, a manager or a director.

In the operations system 100, a multitude of activities can occur simultaneously. These activities can broadly be broken out into "projects," "issues," and "tasks." A "project" can, for example, define an activity with a finite length of time, money, and other resources allocated. For example, in an oil industry, a project can include building software related to an aspect of an operation in the oil industry. An "issue" can, for example, define a problem or an event, such as audits, meetings requiring preparation, key machines breaking down, Month-End Close issues, etc., related to the operations system 100. For example, an "issue" can include a specific oil purifying machine breaking down. A "task" can be associated with a project or an issue, and typically is part of some ongoing process associated with the project or issue. For example, a task can include building a specific function within a larger piece of software.

In some implementations, to allow users of the user devices 104, such as management, e.g., managers and directors, associated with the operation system 100 to have a overview of the portfolio of projects, issues, and tasks, the operations management system 102 can track these activities as activity items. In some implementations, the activity items that are not progressing towards completion and/or needs additional support in progressing towards completion can be escalated by the operations management system 102.

In some implementations, management can obtain a high-level view of the portfolio of activities. For example, users of the user devices 104 can escalate an activity item to draw the attention of the management of the organization to the escalated activity item. In one implementation, the decision to escalate can, for example, be made based on organizational strategies, goals, and client expectations associated with the operations system 100. In another implementation, the decision to escalate can be made automatically based on an escalation criterion, e.g., an activity item not being completed within an expected time frame, for example.

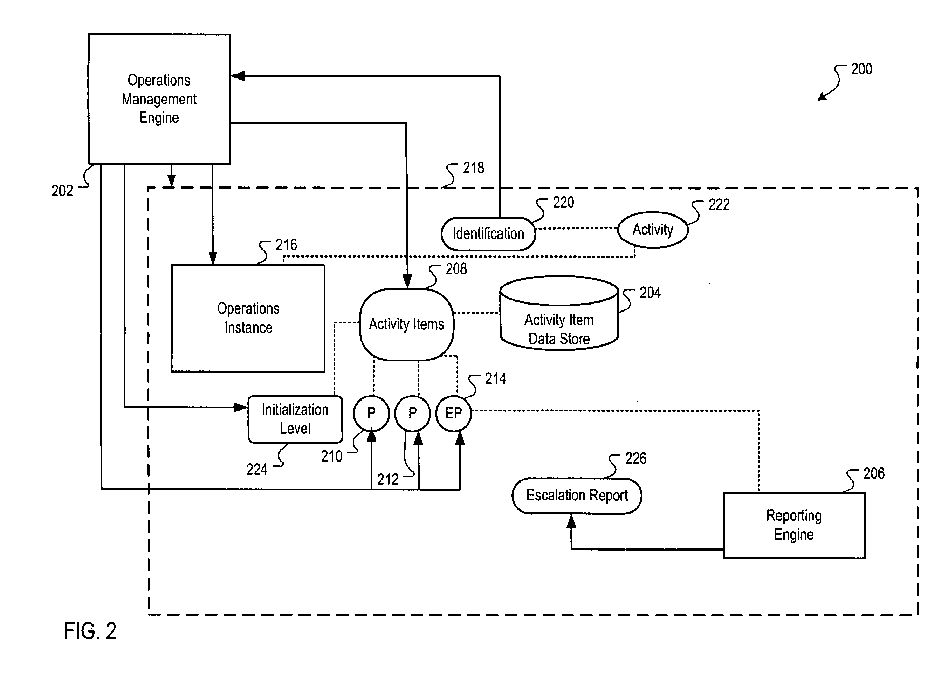

Fig. 2 is a block diagram of an example operations management activity system 200. The operations management activity system 200 can, for example, be implemented in the operations management system 102 utilizing one or more computing devices that include memory devices storing processing instructions and processing devices for executing the processing instructions. Other implementations, however, can also be used. For example, the operations management activity system 200 can be implemented by operations management system 102 and receive data from the user devices 104 of Fig. 1.

In one implementation, the operations management activity system 200 can, for example, create activity items related to activities in an operations environment. The activity items can be associated with activities such as a project, task, or issue and include one or more parameters, including an escalation parameter. The operations management activity system 200 can, for example, generate an escalation report based on an escalation parameter associated with each activity item. The report can, for example, be sent to a user such as a manager associated with the operations instance.

The operations management activity system 200 can, for example, include an operations management engine 202, an activity item data store 204, and a reporting engine 206. In one implementation, the activity item data store 204 can comprise a unitary data store, such as a hard drive. In another implementation, the activity item data store 204 can comprise a distributed data store, such as a storage system that is distributed over a network. Other implementations, however, can also be used.

The activity item data store 204 can, for example, store one or more activity items 208. Each activity item 208 can be associated with an activity, e.g., projects, issues, and tasks. Each activity item 208 in the activity item data store 204 can be associated with one or more parameters 210, 212, 214, e.g. title, type, category, priority, target date, status, owner, assigned to, and description. The parameters 210, 212, 214 can change according to an operations environment 218 and/or operations instance 216. For example, if the operations environment 218 is an oil industry, the activity item 208 can include a "stream" parameter, e.g., breakdown in a strategic business unit, such as:
1) Upstream: Oil & Gas exploration and extraction.
2) Mid-stream: Moving the oil or gas either via ship, pipeline to the refinery.
3) Refining: Separating the oil into its various sub-products (methane, gasoline, diesel, jet fuel, road tar...).
4) Marketing: Sales at either the retail or wholesale level.
The parameters 210, 212, 214 can thus be dependent on an operations type. For example, a user of a user device 104 creating the activity item 208 can set a "stream" parameter if the activity item 208 is being created for the oil industry.

An activity item 208 can be represented by a data structure stored in a computer readable medium, and which includes a title, e.g., if the activity item 208 is a project, the title can be "Maintenance software." The activity item 208 can also include an activity type identifying the type of activity, e.g., a project, a task, or issue. The activity item 208 can also be categorized according to a category that can, for example, define the activity item 208 according to a function of the type of business operation for which the system is configured. The activity item 208 can also be prioritized to indicate the importance or priority status of the activity item 208. For example, if the activity item 208 is very important and must be completed as soon as possible, it can have a priority of "high." The activity item 208 can also include a target date that defines a target date for completion of the activity item 208. The activity item 208 can also include a status to reflect the progress of the activity item 208 towards completion. For example, a status can include "not started," "in progress," or "completed." The activity item 208 can also include an owner identifying a person (or entity) that created the activity item 208, and can be assigned to a person or entity that is assigned to complete the activity item 208. The activity item 208 can also a description of the work associated with the activity item 208.

In one implementation, the operations management engine 202 can create an operations instance 216 in an operations environment 218, and an operations environment 218 can, for example, include one or more operations instances 216. The operations instance 218 can relate to an aspect of a larger operation, and can, for example, include one or more activities including projects, tasks, and issues. For example, in an operations instance 216, a project can include building software for a first part of an operation; a task can include making the software compatible on various platforms; and an issue can include the software not working correctly when operated remotely.

The operations management engine 202 can, for example, receive an identification 220 of an activity 222 relating to the operations instance 216. The identification 220 can, for example, be received from a user of a user device 104. For example, the activity can include a task of completing a software installation. The identification 220 can, for example, include the user of a user device 104 creating a new activity item 208 through the operations management engine 202.

The operations management engine 202 can, for example, receive a selection of the one or more parameters 210, 212, 214 relating to the activity 222. The selection of the one or more parameters 210, 212, 214 can, for example, be received from a user. The one or more parameters 210, 212, 214 can relate to specifics of the activity. For example, the parameters 210, 212, 214 can include a date of completion for the activity 222, a person the activity 222 is assigned to, and the name of the person that created an activity item 208 associated with the activity 222. In one implementation, the operations management engine 202 can use the one or more parameters 210, 212, 214 to create the activity item 208. The activity item 208 can be stored along with other activity items relating to the operations instance 216.

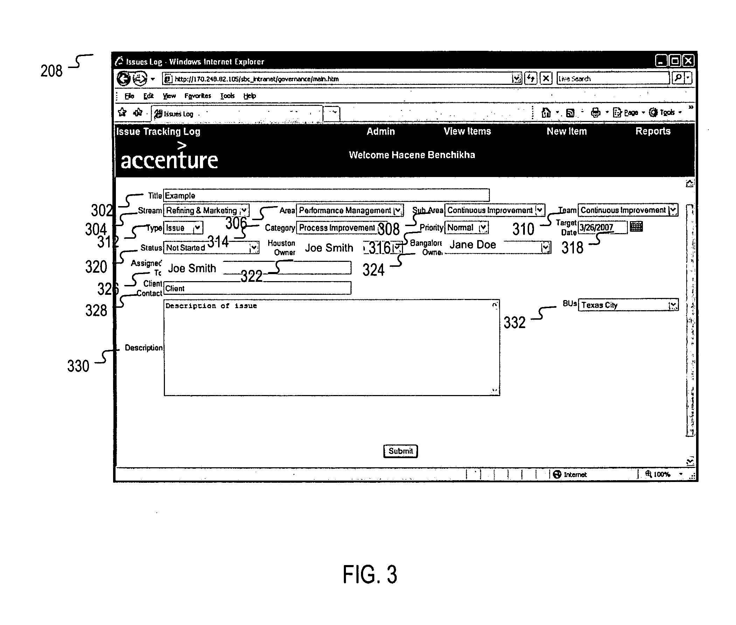

Fig. 3 is an example screenshot of an environment for creating an activity item 208 for an operations instance 216 in an oil industry. The operations management engine 202 can, for example, receive a selection of one or more of the example parameters "title" 302, "stream" 304, "area" 306, "sub area" 308, "team" 310, "type" 312, "category" 314, "priority" 316, "target date" 318, "status" 320, "Houston owner" 322, "Bangalore owner" 324, "assigned to" 326, "client contact" 328, "description" 330, and "BUs" 332, as described above.

In one implementation, the operations management system 202 can associate a document related to the activity item 208 with the activity item 208. The operations management engine 202 can associate the document when creating the activity item 208, or with a preexisting activity item 208. The document can, for example, include data related to the activity item, e.g., a detailed description of the activity item 208; a software error report for a current proposed solution to a problem related to the activity item 208, etc. For example, if the activity item 208 defines an issue relating to the incorrect loading of a web page, the document can include a screenshot of the web page illustrating the problem. Therefore, the user assigned to the activity item 208 can review the document when trying to resolve the activity item 208.

In one implementation, the operations management engine 202 can, for example, associate a status parameter with the activity item 208 that indicates the status of the progress of the activity item 208. The operations management engine 202 can associate a status parameter when creating the activity item 208, or with a preexisting activity item 208. The status parameter can, for example, include one state from a group states. The states can, for example, include "in progress," "not started," or "completed."

In one implementation, the operations management engine 202 can, for example, identify an initialization level 224 for the activity item 208. The initialization level 224 can, for example, be associated with an operation level of the user that creates the activity item 208. An operation instance 216 can include users of different operation levels. For example, an operation level can include "liaison lead," "manager," or "director." For example, if a user that creates the activity item 208 is at the operation level "liaison lead," the initialization level 224 associated with the activity item 208 can be identified as "liaison lead."

In one implementation, the operations management engine 202 can, for example, initialize the one or more parameters 210, 212, 214 associated with the activity item 208 based on the initialization level 224, wherein one of the parameters 210, 212, 214 comprises an escalation parameter 214. In one implementation, the escalation parameter 214 can, for example, be associated with a user that is to receive a notification of the activity item 208 when the activity item 208 is escalated. In one implementation, the escalation parameter 214 can be associated with an operation level, e.g., an operation level of the users. For example, if the operation management engine 202 implements three operation levels, "level1," "level2," and "level3," the escalation parameter can be set to any of those three levels. For example, if the activity item 208 is a task associated with the operations instance 216, and the user assigned to the activity item 208 does not complete the activity item, the activity item 208 can be escalated to another user, e.g., a manager, supervisor or mentor, based on the escalation parameter 214. If the escalation parameter 214 is set to "manager," the activity item 208 can be escalated to a manager associated with the operation instance 216.

In one implementation, the operations management engine 202 can, for example, receive a selection to change one or more of the parameters 210, 212, 214. The selection to change the one or more parameters 210, 212, 214 can, for example, be received from a user. The parameters 210, 212, 214 can be changed to reflect a change in the activity item 208. For example, the activity item 208 can be changed to reflect an escalation parameter 214, e.g., the activity item 208 has not been completed according to a schedule, and thus, the escalation parameter 214 may be changed to escalate the activity item 208 to another user, such as a manager.

The operations management engine 202 can update the one or more parameters 210, 212, 214 in response to the change requests. For example, if a user decides to change the escalation parameter 214 to indicate an escalation to a user at higher management level, the operations management engine 202 can change the escalation parameter 214 operation level to reflect this request.

In one implementation, the user that created the activity item 208 can update the activity item and change any one of the parameters 210, 212, 214. In other implementations, any user associated with the operation environment 218 can change the parameters 210, 212, 214. For example, a manager associated with the operations instance 216 can change an activity item 208 even though the manager did not create the activity item 208.

In other implementations, only users at an operation level equal to or greater than the operation level of the escalation parameter 214 can change the escalation parameter. For example, if there are three operation levels in the following ascending hierarchy - engineering, engineering management, and director - and an escalation parameter 214 is at the engineering operation level, then any user at the engineering level or higher can change the level of the escalation parameter 214. However, if a user at the engineering level changes the escalation parameter 214 to the engineering management level, then only users at the engineering management and director level can change the escalation parameter 214. This change hierarchy can also be applied to other parameters.

In one implementation, when the escalation parameter 214 of the activity item 208 is updated, other users, such as management associated with the activity item 208, are notified of the change. For example, management users can be notified by an email message that includes the activity item 208 and the description of the activity item 208. The description can, for example, include the reason for the change in the escalation parameter 214. For example, if the escalation parameter 214 is changed from "manager," to "director," management user can receive an email including the name of the activity item 208 and the parameters 210, 212, 214 associated with the activity item 208.

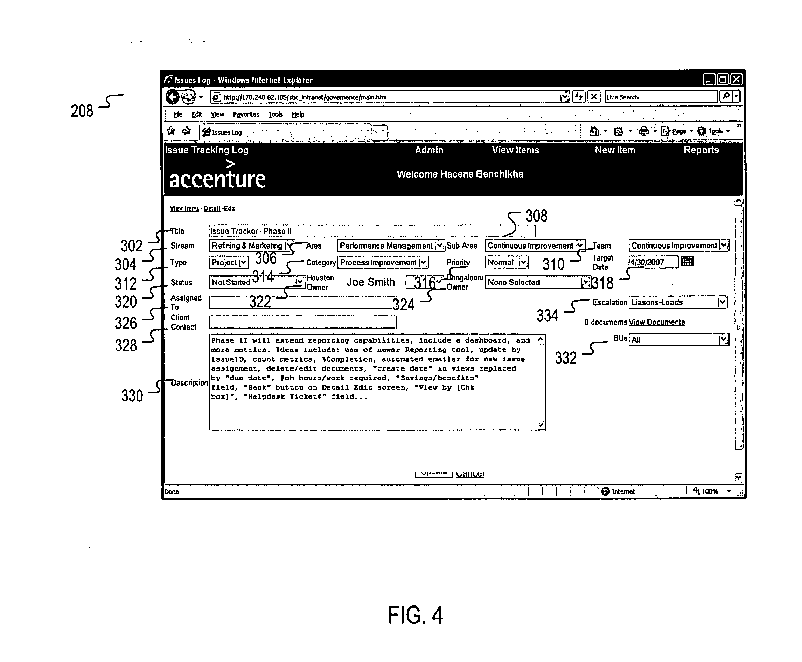

Fig. 4 is an example screenshot of an environment for changing an activity item 208. The activity item 208 is a "project" as indicated by the "type" 312 parameter. A user can change any of the parameters 302 - 334, including the escalation parameter 334. The escalation parameter 334 in this example is set to the same operation level as the user that created the activity item 208. The "Houston owner" 322 "Joe Smith" is the user that created the activity item 208. Therefore, the escalation parameter 334 is set to the operation level that the owner "Joe Smith" belongs to. Since "Joe Smith" is in the operation level "liaison lead," the escalation parameter 334 is set to "liaison lead." In this example, the owner "Joe Smith" can change any of the parameters 302-334.

In one implementation, the operations management engine 202 can, for example, track the updates to the one or more parameters 210, 212, 214 in a log. The log can, for example, include an audit log. Each time one of the parameters 210, 212, 214 is changed, the log can be updated with the new information. For example, if the status parameter is changed from "in progress" to reflect the activity item 208 has been "completed," the log can indicate the status has been changed to "completed" from "in progress." The log can, for example, also include the name of the user that made the change.

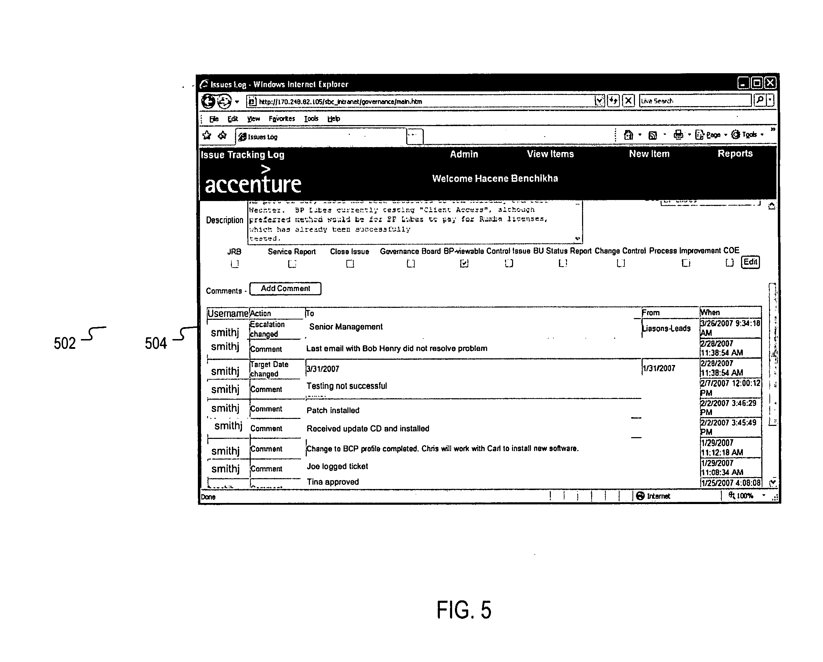

Fig. 5 is an example screenshot for illustrating a log including all the changes made to an activity item 208. In this example, anytime any of the parameters associated activity item 208 is changed or updated, the log 502 records each change. For example, if the user "smithj" changes the escalation parameter 334 to "senior management" the log 502 records this change as seen in the log line 504.

In one implementation, a user can view any activity item 208 associated with the operations instance 216. The user can view the activity items according to one or more filters. The filters can, for example, be associated with the one or more parameters 210, 212, 214. For example, the user can view all of the activity items created that are associated with the operations instance 216 and view any activity item 208 that is created by the user.

In one implementation, the reporting engine 206 can, for example, generate an escalation report 226 based on the escalation parameter 214. The escalation report 226 can, for example, be generated using one or more filters. The filters can be responsive to any of the one of the parameters 210, 212, 214. For example, the escalation report 226 can include activity items 208 filtered by type of activity items, priority of the activity items, owner of the activity items, and escalation group of the activity items. The escalation report 226 can, for example, be created for an operation level. For example, if the escalation parameter 214 can be set to operation levels "level1," "level2," and "level3," the escalation report 226 can be created for each of these three operation levels, "level1," "level2," and "level3," and the escalation report 226 can include any activity item 208 associated with each of these levels.

In some implementation, escalation reports can be distributed according to an operations level. For example, users at or above a particular operation level can receive escalation reports for each operation level, e.g., escalation reports for all levels can be distributed only to managers and directors. Alternatively, users at a particular operation level can only receive escalation reports for operation levels at or below the particular operation level, e.g., a manager can only receive escalation reports at or below the manager level, while a director can receive escalation reports at or below the director level. Other distribution schemes can also be used.

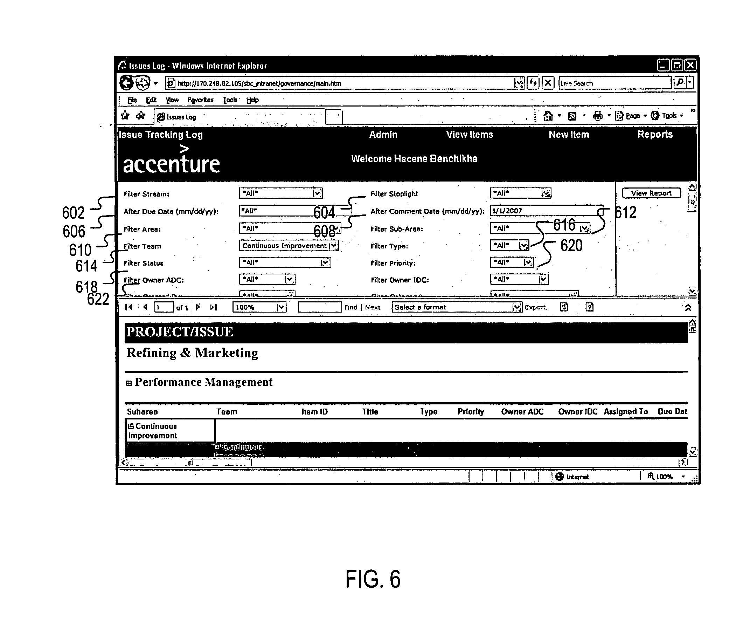

Fig. 6 is a screenshot for selecting an escalation report based on one or more filters. In this example, a user can create an escalation report using any of the filters "stream" 602, "stoplight" 604, "after due date" 606, "after comment date" 608, "area" 610, "sub-area" 612, "team" 614, "type" 616, "status" 618, "priority" 620, "owner" 622, and escalation 624 (not shown). A user can determine which filters to select from the filters 602 - 624 and generate an escalation report 226 corresponding to these filters. In this example, the user has selected to show all activity items 208 that are part of the "continuous improvement" team 614. The reporting engine 206 can create the escalation report 226 and send it to any user that is associated with the operations instance 216. In one implementation, the reporting engine 206 can send the report to a user such as a manager or director in order for the manager or director to be able to view the activity items 208 that have been escalated.

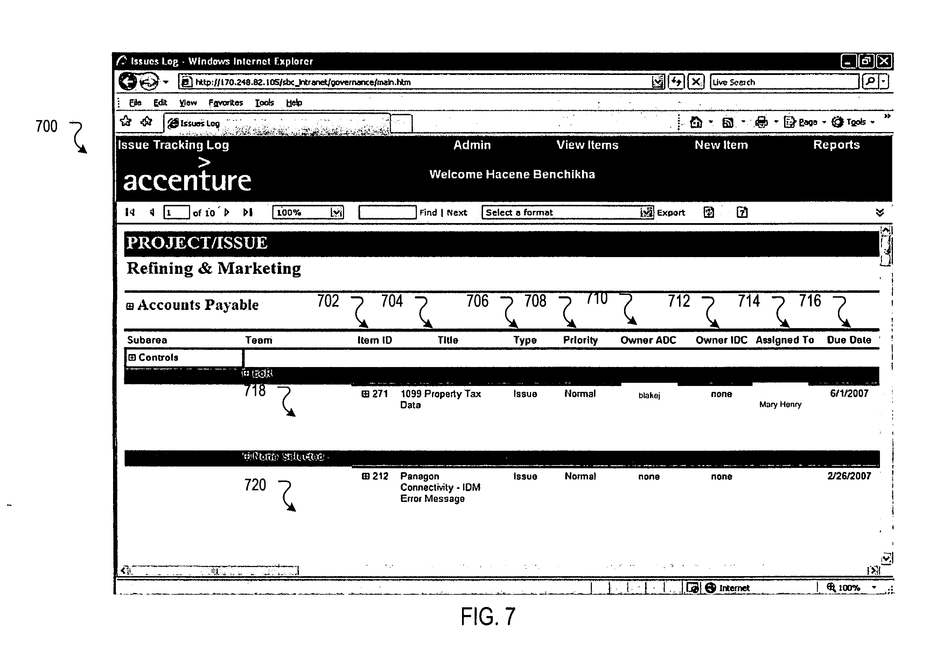

Fig. 7 is an example screenshot of an escalation report 700. The escalation report 700 includes parameters "activity item ID" 702, "Title" 704, "Type" 706, "Priority" 708, "Owner ADC" 710, "Owner IDC" 723, "Assigned to" 714, and "Due Date" 716. Two activity items 718 and 720 are included in the escalation report 700. The report 700 can be sent to a manager or director in order for the manager or director to view the two activity items 718 and 720 that have been escalated.

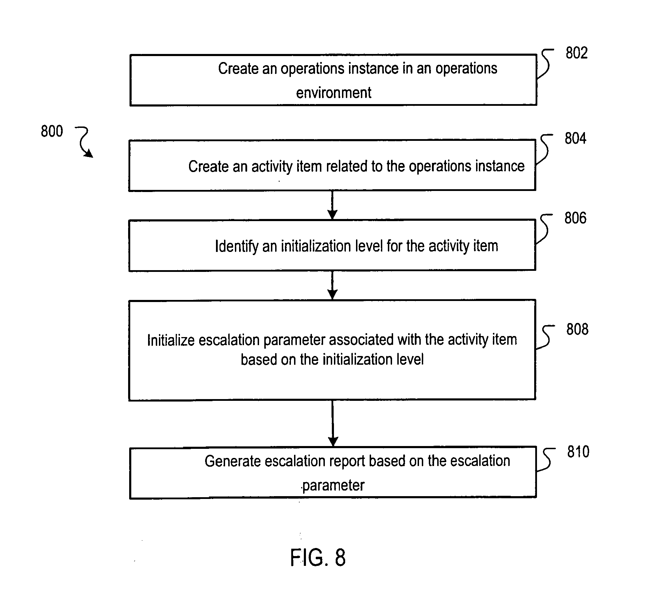

Fig. 8 is an example process 800 for generating an activity item. The process 800 can, for example, be implemented in a system such as the activity management system 200 of Fig. 2.

Stage 802 creates an operations instance in an operations environment. For example, the operations management engine 202 can create an operations instance in an operations environment.

Stage 804 creates an activity item related to the operations instance. For example, the operations management engine 202 can create an activity item related to the operations instance. An example environment for creating the activity item is shown in Fig. 3.

Stage 806 identifies an initialization level for the activity item. For example, the operations management engine 202 can identify an initialization level for the activity item. The initialization level can, for example, be equal to the level of the user creating the activity item.

Stage 808 initializes an escalation parameter associated with the activity item based on the initialization level. For example, the operations management engine 202 can initialize one or more parameters associated with the activity item based on the initialization level.

Stage 810 generates an escalation report based on the escalation parameter. For example, the reporting engine 206 can generate an escalation report based on the escalation parameter that is provided to users at or above the corresponding initialization level. An example escalation report is shown in Fig. 3.

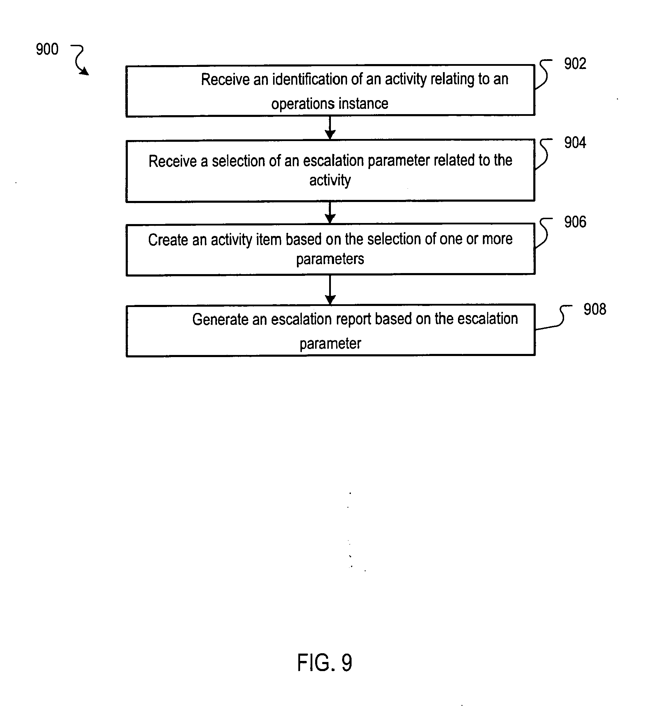

Fig. 9 is an example process 900 for generating an activity item. The process 900 can, for example, be implemented in a system such as the activity management system 200 of Fig. 2.

Stage 902 receives an identification of an activity relating to an operations instance. For example, the operations management engine 202 can receive an identification of an activity relating to an operations instance.

Stage 904 receives a selection of an escalation parameter related to the activity. For example, the operations management engine 202 can receive a selection of one or more parameters relating to the activity, wherein one of the parameters is an escalation parameter.

Stage 906 creates an activity item based on the selection of one or more parameters. For example, the operations management engine 202 can create an activity item based on the selection of one or more parameters.

Stage 908 generates an escalation report based on the escalation parameter. For example, the operations management engine 202 can generate an escalation report based on the escalation parameter.

The apparatus, methods, flow diagrams, and structure block diagrams described in this patent document may be implemented in computer processing systems including program code comprising program instructions that are executable by the computer processing system. Other implementations may also be used. Additionally, the flow diagrams and structure block diagrams described in this patent document, which describe particular methods and/or corresponding acts in support of steps and corresponding functions in support of disclosed structural means, may also be utilized to implement corresponding software structures and algorithms, and equivalents thereof.

This written description sets forth the best mode of the invention and provides examples to describe the invention and to enable a person of ordinary skill in the art to make and use the invention. This written description does not limit the invention to the precise terms set forth. Thus, while the invention has been described in detail with reference to the examples set forth above, those of ordinary skill in the art may effect alterations, modifications and variations to the examples without departing from the scope of the invention.

According to another aspect, a computer-implemented method may comprise:
receiving an identification of an activity relating to an operations instance;
receiving a selection of one or more parameters relating to the activity,
   wherein one of the parameters is an escalation parameter;
creating an activity item based on the selection of one or more parameters; and
generating an escalation report based on the escalation parameter.

According to yet another aspect, an activity item may comprise a project, a task or an issue.

According to yet another aspect, the method may further comprise:
receiving a selection to change one or more of the parameters.

According to yet another aspect, the method may further comprise:
providing the escalation report to an entity based on the escalation parameter.

According to yet another aspect, the method may further comprise:
tracking changes of the one or more parameters in a log.

According to yet another aspect, a system may comprise:
means for generating an activity relating to an operations instance and for associating and initializing an escalation parameter with the activity item; and
means for generating an escalation report based on the escalation parameter.

## Claims

1. A computer-implemented method, comprising:
creating an operations instance in an operations environment;
creating an activity item related to the operations instance;
identifying an initialization level for the activity item;
initializing one or more parameters associated with the activity item based on the initialization level, wherein one of the parameters comprises an escalation parameter; and
generating an escalation report based on the escalation parameter.

2. The method of claim 1, wherein the activity item comprises a project, an issue, and/or a task.

3. The method of claim 1 or 2, comprising:
associating a document with the activity item, wherein the document is related to the activity item; and/or
associating a status parameter with the activity item, wherein the status parameter indicates whether the activity item is completed.

4. The method of any one of the preceding claims, comprising:
providing the escalation report to an entity based on the escalation parameter.

5. The method of any one of the preceding claims, comprising:
updating the one or more parameters in response to change requests; and
tracking the updates to the one or more parameters in a log.

6. The method of claim 5, wherein the log comprises an audit trail.

7. A system, comprising:
an activity management engine configured to generate an operations management environment and generate an operations instance in the operations environment and an activity item related to the operations instance, and to identify an initialization level for the activity item and initialize one or more parameters associated with the activity item based on the initialization level,
wherein one of the parameters is an escalation parameter; and
a reporting engine to generate an escalation report based on the escalation parameter.

8. The system of claim 7, wherein an activity item comprises a project, an issue, or a task.

9. The system of claim 7 or 8, wherein the activity item comprises a problem report.

10. The system of any one of claims 7 to 9, wherein the activity management engine is configured to:
associate a document with the activity item .

11. The system of claim 10, wherein the document comprises data related to resources associated with the activity item.

12. The system of any one of claims 7 to 11, wherein the activity management engine is configured to:
generate an audit log for the activity item, the audit log comprising date related to changes in the one or more parameters associated with the activity item.

13. Computer program product comprising computer readable instructions, which when loaded and run in a computer and/or computer network system, causes the computer system and/or the computer network system to perform operations according to a method of any one of claims 1 to 12.
